# FASCICULE DE BREVET EUROPEEN

(11) **EP 3 289 348 B1**
(45) Date de publication et mention de la délivrance du brevet: **05.05.2021**
(21) Numéro de dépôt: 16720801.6
(22) Date de dépôt: 28.04.2016
(51) Int. Cl.: G01N 29/26

(54) **PROCEDE DE CONTRÔLE DE SOUDURES PAR ULTRASONS**
VERFAHREN ZUR STEUERUNG VON VERSCHWEISSUNGEN MITTELS ULTRASCHALL
METHOD FOR CONTROLLING WELDS BY ULTRASOUND

(30) Priorité: 28.04.2015 FR 1553821
(43) Date de publication de la demande: 07.03.2018
(73) Titulaire: FRAMATOME, 92400 Courbevoie (FR)
(72) Inventeur: BLEUZE, Alexandre, 71640 Givry (FR); LEFEVRE, Fabien, 39140 Nance (FR); BADER, Bruno, 71370 Ouroux-sur-Saône (FR)
(74) Mandataire: Lavoix
(86) Numéro de dépôt international: PCT/EP2016/059559
(87) Numéro de publication internationale: WO 2016/174172

(56) Documents cités:
- EP-A1- 1 953 544
- JP-A- 2007 132 953
- US-A- 3 868 847

## Description

La présente invention concerne un procédé de contrôle de soudures par ultrasons comprenant la fourniture d'un ensemble de contrôle de soudures par ultrasons, comprenant au moins une sonde multiélément annulaire à ondes longitudinales inclinées entre 0 et 5°, comportant plusieurs éléments annulaires concentriques, et, une sonde multiélément linéaire à ondes transversales inclinées entre 35 et 70°, comportant plusieurs éléments rectilignes parallèles entre eux.

Une telle sonde à ultrasons est utilisable pour examiner les parois des différentes structures d'un réacteur nucléaire, notamment pour examiner des soudures de ces parois.

Le document US 2013/0199297 décrit, par exemple, un dispositif de contrôle de soudures par ultrasons, comprenant plusieurs sondes multiéléments linéaires. Ce dispositif permet un contrôle non destructif pour détecter des défauts transversaux, longitudinaux et de laminage.

Le document EP 1 953 544 A1 décrit un système de contrôle d'une conduite par ultrasons. Un faisceau d'émission est transmis en utilisant une partie d'un groupe d'éléments transducteurs d'une sonde à réseau linéaire. Un faisceau de réception est formé en utilisant les éléments transducteurs d'une partie différente du groupe d'éléments transducteurs. Un écho de défaut est reçu.

Le document JP 2007132953 décrit un système de détection de défaut par ultrasons comprenant un transducteur à ultrasons de type réseau annulaire.

Cependant l'ensemble des techniques décrites ne permettent pas d'obtenir la détection de défauts de faible dimension et une fiabilité équivalente à celle obtenue par contrôle par radiographie conventionnelle.

Un but de l'invention est donc de fournir un ensemble de contrôle permettant un contrôle fiable d'une soudure, en considérant l'accès depuis un seul côté de la soudure.

A cet effet, l'invention a pour objet un procédé de contrôle selon la revendication 1.

Selon des modes de réalisation particuliers de l'invention, le procédé de contrôle présente l'une ou plusieurs caractéristiques des revendications 2 à 7, prise(s) isolément ou suivant toute(s) combinaison(s) techniquement possible(s).

D'autres caractéristiques et avantages de l'invention apparaîtront à la lecture de la description qui va suivre, donnée uniquement à titre d'exemple et faite en se référant aux dessins annexés, sur lesquels :
- les figures 1 et 2 sont des schémas, respectivement, de la sonde annulaire et de la sonde linéaire de l'ensemble de contrôle de l'invention,
- la figure 3 est une vue simplifiée en perspective des éléments d'une sonde linéaire disposés en une lentille acoustique,
- les figures 4 et 5 sont des représentations schématiques du mouvement global des sondes lors du contrôle d'une soudure, d'après des modes de réalisation particuliers du procédé de l'invention,
- les figures 6 à 8 sont des schémas en coupe du plan de parcours, respectivement, de la sonde annulaire, de la sonde linéaire fonctionnant au demi-bond, c'est-à-dire sans réflexion sur la paroi opposée au sondage, et de la sonde linéaire fonctionnant au bond complet, c'est-à-dire avec réflexion sur la paroi opposée au sondage, selon un mode de réalisation de l'invention.

L'ensemble de contrôle par ultrasons de l'invention comprend au moins une sonde multiélément annulaire à ultrasons 12, au moins une sonde multiélément linéaire à ultrasons 14 et un calculateur 16 permettant de piloter les différentes sondes.

Ce dispositif est adapté au contrôle de soudures des parois d'un réacteur nucléaire et/ou de sa tuyauterie. Le matériau des parois et/ou des soudures est typiquement de l'acier ferritique.

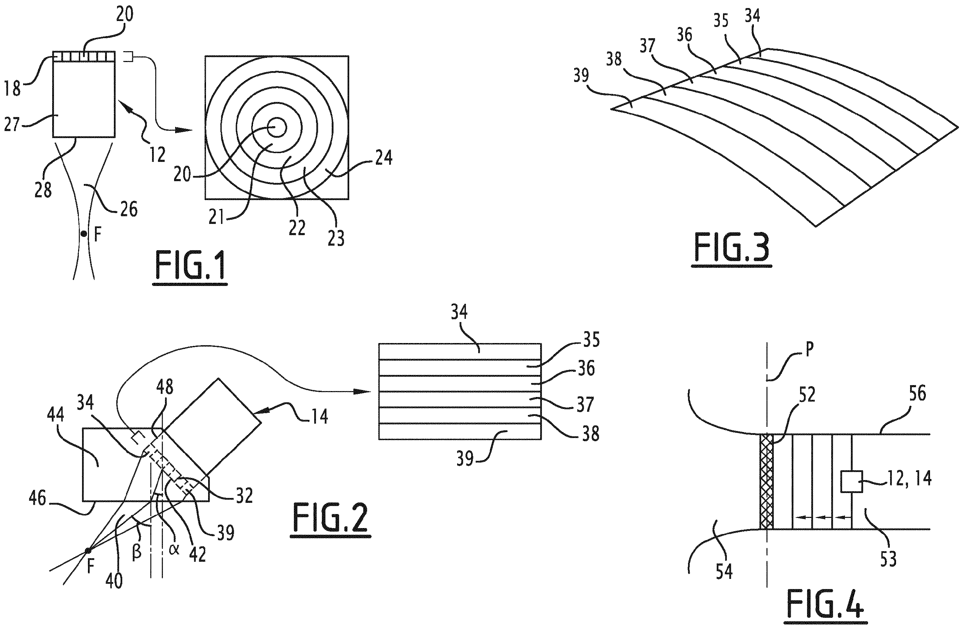

Une sonde multiélément annulaire 12 est représentée à la figure 1. La sonde annulaire comprend un organe d'émission d'ondes 18. L'organe d'émission d'ondes 18 comprend de multiples éléments émetteurs 20 à 24. L'élément émetteur central 20 est un disque et les autres éléments émetteurs 21 à 24 sont des anneaux concentriques, propres à émettre chacun un signal ultrasonore élémentaire. Les signaux ultrasonores élémentaires forment ensemble un faisceau ultrasonore d'ondes polarisées longitudinalement 26 et le faisceau ultrasonore 26 correspond à la somme des signaux ultrasonores élémentaires émis par les éléments émetteurs d'ultrasons 20 à 24.

Le faisceau ultrasonore 26 a une fréquence comprise entre 5 et 15 MHz, et plus particulièrement centrée sur 10 MHz avec une bande passante comprise entre 8 et 13 MHz.

L'utilisation d'une telle fréquence est notamment possible du fait de la nature des matériaux que traverse le faisceau ultrasonore 26. En effet si le matériau possède un indice de grain trop faible, c'est-à-dire si les grains du matériau ont une taille trop importante, le faisceau ultrasonore d'ondes longitudinales 26 est rétrodiffusée par les grains, détectant alors les grains du matériau, et non uniquement les défauts du matériau. Pour une fréquence comprise entre 8 et 13 MHz, l'indice de grosseur de grain du matériau doit être supérieur à 4.

Les éléments émetteurs 20 à 24, ou au moins une partie d'entre eux, sont également propres à recevoir les signaux sonores réfléchis. Il s'agit d'éléments émetteurs-récepteurs. En option ou en variante, l'organe d'émission d'ondes 18 comprend des éléments récepteurs propres à recevoir les signaux réfléchis qui sont distincts des éléments émetteurs 20 à 24.

L'organe d'émission d'ondes 18 comprend un support d'éléments ou sabot 27 présentant une surface émettrice 28 sur laquelle sont répartis les éléments émetteurs 20 à 24. Le sabot 27 permet de soutenir et protéger les éléments 20 à 24, et également d'éloigner si besoin les éléments 20 à 24 de la face de contact entre la sonde et l'élément à analyser. La hauteur du sabot 27 dépend de l'épaisseur de l'élément à contrôler.

Dans le cas d'éléments récepteurs distincts des éléments émetteurs 20 à 24, ces éléments récepteurs sont répartis sur la surface émettrice 28.

Le faisceau ultrasonore 26 est faiblement incliné, par exemple d'un angle inférieur à 5°, par rapport à la normale à la surface émettrice. Typiquement, l'angle d'inclinaison du faisceau 26 est sensiblement égal à 0°.

Dans un mode de réalisation, la sonde annulaire 12 comprend un moyen de focalisation des énergies acoustiques émises par les éléments émetteurs annulaires 20 à 24.

On souhaite obtenir un faisceau ultrasonore 26 focalisé en un point F confondu avec le point d'intérêt visé. Le point F est situé sensiblement sur la droite passant par le centre de la surface émettrice 28 et perpendiculaire au plan de la surface émettrice 28.

Pour former un faisceau ultrasonore focalisé en un point F, les signaux élémentaires ultrasonores sont émis avec des décalages temporels de telle manière qu'ils atteignent le point F en phase.

Le calculateur 16 est programmé pour déterminer une loi de retard pour chaque élément émetteur 20 à 24, et pour commander l'émission des signaux ultrasonores par les éléments émetteurs 20 à 24 en fonction de leurs lois de retard respectives. Chaque loi de retard détermine un décalage temporel d'émission d'un signal ultrasonore élémentaire par l'élément émetteur associé par rapport à un signal de référence. Les mêmes lois de retard sont également appliquées aux éléments récepteurs.

Pour illustrer la loi des retards dans le cas de la sonde annulaire 12, un cas est expliqué ci-dessous. Cet exemple n'est pas restrictif mais utile à la compréhension de l'invention. On considère, par exemple, que la sonde a cinq éléments annulaires concentriques 20 à 24.

La loi des retards permet ici de focaliser le faisceau à une profondeur maximale, notée Pmax. Pmax est par exemple le bas de la soudure, dont l'épaisseur est par exemple inférieure ou égale à 40mm. On note t_{act} le temps d'activation correspondant au retard maximum appliqué à l'ensemble des éléments activés.

Si le point F est situé à une profondeur inférieure à Pmax divisée par trois, une première loi focale est appliquée. Seuls le disque central 20 et les deux anneaux adjacents 21 et 22 sont activés au cours de l'émission du faisceau 26. L'anneau 22 est activé en premier. Après un retard inférieur à t_{act} divisé par 1,5, l'anneau 21 est activé. Enfin, après une durée égale à t_{act}, le disque 20 est activé.

Si le point F est situé à une profondeur comprise entre Pmax divisée par trois et deux fois Pmax divisée par trois, une deuxième loi focale est appliquée. Seuls le disque central 20 et les trois anneaux adjacents 21 à 23 sont activés au cours de l'émission du faisceau 26. L'anneau 23 est activé en premier. Après un retard inférieur à t_{act} divisé par 2,3, l'anneau 22 est activé. A nouveau après un retard inférieur à t_{act} divisé par 1,3, l'anneau 21 est activé. Enfin, après une durée égale à t_{act}, le disque 20 est activé.

Si le point F est situé à une profondeur supérieure à deux fois Pmax divisée par trois, une troisième loi focale est appliquée. L'ensemble des cinq éléments 20 à 24 sont activés au cours de l'émission du faisceau 26. L'anneau 24 est activé en premier. Après un retard inférieur à t_{act} divisé par 3, l'anneau 23 est activé. A nouveau après un retard inférieur à t_{act} divisé par 1,6, l'anneau 22 est activé. A nouveau après un retard inférieur à t_{act} divisé par 1,2, l'anneau 21 est activé. Enfin, après une durée égale à t_{act}, le disque 20 est activé.

Cet exemple permet d'illustrer le principe des lois de retard permettant de focaliser le faisceau 26 à trois profondeurs différentes. Le principe peut être adapté pour atteindre d'autres profondeurs et/ou en utilisant un nombre différent d'éléments circulaires et/ou en modifiant leurs dimensions respectives.

Une sonde multiélément linéaire 14 est représentée à la figure 2. La sonde linéaire 14 comprend un organe d'émission d'ondes 32. L'organe d'émission d'ondes 32 comprend de multiples éléments émetteurs 34 à 39. Il y a par exemple 32 éléments émetteurs 34 à 39. Les éléments émetteurs 34 à 39 sont des éléments rectilignes parallèles entre eux, identiques et formant un rectangle.

Les éléments émetteurs 34 à 39 sont propres à émettre chacun un signal ultrasonore élémentaire. Les signaux ultrasonores élémentaires forment ensemble un faisceau ultrasonore d'ondes polarisées transversalement 40 et le faisceau ultrasonore 40 correspond à la somme des signaux ultrasonores élémentaires émis par les éléments émetteurs d'ultrasons 34 à 39. Le faisceau ultrasonore 40 a une fréquence comprise entre 6 et 10 MHz, et plus particulièrement entre 7 et 9 MHz.

L'utilisation d'une telle fréquence est notamment possible du fait de la nature des matériaux que traverse le faisceau ultrasonore 40. En effet si le matériau possède un indice de taille de grain trop faible, c'est-à-dire si les grains du matériau ont une taille trop importante, le faisceau ultrasonore transversal 40 est rétrodiffusé par les grains, détectant ainsi les grains du matériau, et non uniquement les défauts du matériau. Pour une fréquence comprise entre 7 et 9 MHz, l'indice de grosseur de grain du matériau doit être supérieur à 4.

Les éléments émetteurs 34 à 39, ou au moins une partie d'entre eux, sont également propres à recevoir les signaux sonores réfléchis. Il s'agit d'éléments émetteurs-récepteurs. En option ou en variante, l'organe d'émission d'ondes 32 comprend des éléments récepteurs propres à recevoir les signaux réfléchis qui sont distincts des éléments émetteurs 34 à 39.

L'organe d'émission d'ondes 32 comprend un support d'éléments présentant une surface émettrice 42 sur laquelle sont répartis les éléments émetteurs 34 à 39. Dans le cas d'éléments récepteurs distincts des éléments émetteurs 34 à 39, ces éléments récepteurs sont également répartis sur la surface émettrice 42.

Dans un mode de réalisation, la sonde linéaire 14 comprend un moyen de focalisation des énergies acoustiques émises par les éléments émetteurs rectangulaires 34 à 39, dans le plan perpendiculaire à la propagation. Ce moyen de focalisation des énergies acoustiques est par exemple mécanique et plus particulièrement est une lentille acoustique. La lentille acoustique est un dispositif permettant de resserrer le faisceau ultrasonore 26. La lentille acoustique est une disposition particulière des éléments 34 à 39 de la sonde 14 : la surface émettrice 28 est en forme de paraboloïde de sommet un point haut, comme représenté à la figure 3. Les éléments émetteurs 34 à 39 et récepteurs possèdent alors un rayon de courbure compris entre cinq et vingt fois la longueur des éléments, le centre de courbure étant situé en-dessous des éléments.

L'ensemble de contrôle comprend un sabot 44 permettant d'incliner la sonde linéaire 14 par rapport à la surface sur laquelle la sonde 14 est disposée.

Le sabot 44 possède une surface de contact 46, destinée à être posée sur la surface de la matière à inspecter, et un logement 48 prévu pour la sonde 14. Le logement 48 est tel que la sonde linéaire 14, placée dans le logement 48, émet un faisceau 40 incliné d'un angle α par rapport à la perpendiculaire de la surface de contact 46.

Le faisceau 40 est réfracté à chaque changement de milieu possédant des propriétés acoustoélastiques. Ainsi le faisceau 40 est réfracté lors du passage du sabot 44 au milieu dont fait partie le point F, ce qui doit être pris en compte par le calculateur 16 pour l'activation des éléments 34 à 39 de la sonde linéaire 14. Après réfraction, le faisceau 40 est incliné d'un angle β par rapport à la perpendiculaire à la surface de contact 46. L'angle α est tel que l'angle β est compris entre 30 et 75°. De plus, le faisceau 40 d'ondes longitudinales dans le milieu du sabot est réfracté en un faisceau 40 d'ondes transversales dans le milieu dont fait partie le point F.

On souhaite obtenir un faisceau ultrasonore 40 focalisé en un point F permettant d'optimiser les performances en sensibilité et résolution dans la plage de travail, soit au demi-bond, soit au bond complet.

Pour former un faisceau ultrasonore focalisé au point F, les signaux élémentaires ultrasonores sont émis avec des décalages temporels de telle manière qu'ils atteignent le point F en phase. Ces décalages temporels permettent la focalisation au point F dans le plan de propagation. La focalisation par la lentille acoustique, qui est mécanique, s'ajoute à celle créée de manière électronique afin d'obtenir des performances ultrasonores accrues par le biais d'un faisceau 40 bien maîtrisé dans sa plage de travail.

Le calculateur 16 est programmé pour déterminer une loi de retard pour chaque élément émetteur 34 à 39, et pour commander l'émission des signaux ultrasonores par les éléments émetteurs 34 à 39 en fonction de leurs lois de retard respectives. Chaque loi de retard détermine un décalage temporel d'émission d'un signal ultrasonore élémentaire par l'élément émetteur associé par rapport à un signal de référence. Les mêmes lois de retard sont également appliquées aux éléments récepteurs.

Pour illustrer le fonctionnement d'une loi de retards dans le cas de la sonde linéaire 14, un exemple est expliqué ci-dessous. Cet exemple n'est pas restrictif mais utile à la compréhension de l'invention.

Le sabot 44 est tel que le faisceau incident, au niveau de la zone de contact entre le sabot 44 et la pièce à contrôler, forme un angle α avec la normale à ladite zone. Le faisceau transmis dans la pièce forme un angle β avec ladite normale, comme illustré sur la figure 2. Le sabot 44 permet de pré-incliner le faisceau 40 pour une valeur de β médiane des valeurs extrêmes que l'on souhaite atteindre, typiquement 35 à 70°, car une déviation de plus de 25° autour de l'angle de réfraction nominal entraîne souvent une déformation du faisceau néfaste aux résultats du contrôle avec une apparition de lobes de réseaux.

Le calculateur 16 active avec un décalage les éléments rectilignes suivant les lois de retard prédéfinies. Chaque faisceau élémentaire émis par les éléments rectilignes 34 à 39 est incliné en direction du chemin vers le point F d'intérêt, lorsque la sonde fonctionne au demi-bond, c'est-à-dire que le faisceau n'est pas réfléchi sur la paroi opposée au sondage avant d'atteindre le point F.

Pour focaliser le faisceau en un point F, les signaux élémentaires ultrasonores sont émis avec des décalages temporels de telle manière qu'ils atteignent le point F en phase. Par exemple, si la sonde est placée tel que ses éléments sont parallèles entre eux et à l'axe de la soudure, alors l'élément le plus éloigné de la soudure est activé en premier, et ainsi de proche en proche, celui le plus proche de la soudure étant activé en dernier.

Cet exemple permet d'illustrer le principe des lois de retard permettant de focaliser le faisceau 40 à un angle donné. Le principe peut être appliqué pour atteindre d'autres angles et/ou différentes distances parcourus par le faisceau et/ou en utilisant un nombre différent d'éléments rectilignes, par exemple 32.

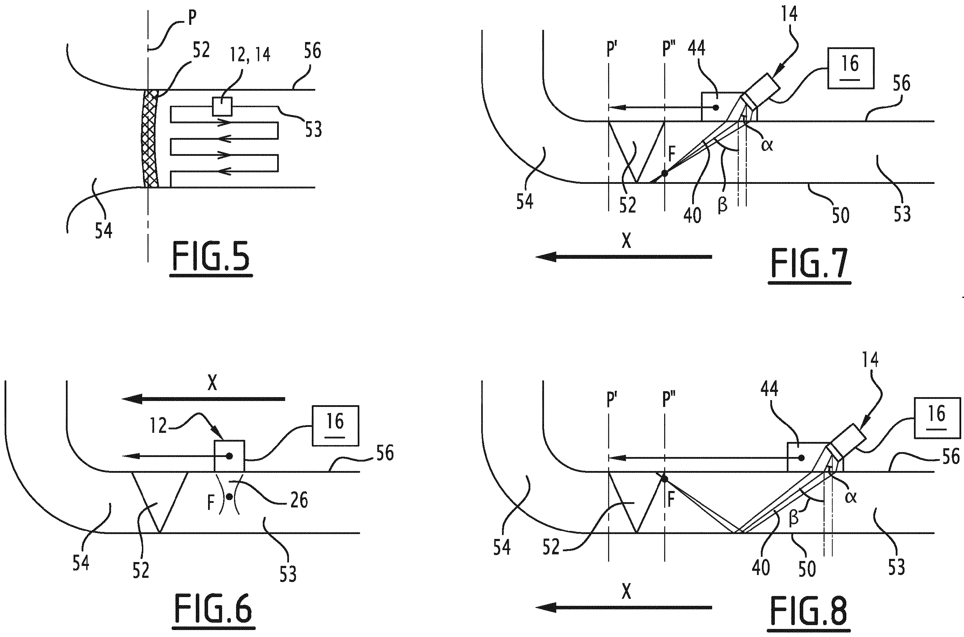

Dans un mode de réalisation de l'invention représenté à la figure 7, le matériau dont fait partie le point F possède une surface intérieure 50 sur laquelle est réfléchi le faisceau ultrasonore 40. La sonde fonctionne alors au bond complet. La loi des retards est adaptée pour focaliser le faisceau ultrasonore 40 au point F en prenant en compte cette réflexion et la nouvelle distance de parcours du faisceau ultrasonore 40 réfléchi.

Un procédé de contrôle d'une soudure avec l'ensemble de contrôle décrit ci-dessus va maintenant être décrit, en référence aux figures 4 à 8.

La soudure 52 à contrôler relie deux éléments 53 et 54. La soudure est par exemple située au niveau d'un coude ou à proximité d'un piquage. Ainsi l'élément 54 ne permet pas de disposer une sonde à sa surface extérieure. En variante, on peut disposer une sonde sur la surface de l'élément 54 uniquement à une distance de l'axe de la soudure 52 inférieure ou égale à une distance donnée, correspondant à la moitié de la largeur de la soudure, une marge, par exemple supérieure ou égale à 10mm, et l'encombrement de la sonde. Par exemple, pour une épaisseur de paroi inférieure ou égale à 40mm, cette distance est sensiblement égale à 80mm.

En outre, on peut disposer la sonde sur la surface 53 à une distance de l'axe de la soudure 52 supérieure ou égale à la distance pour couvrir le recul nécessaire au bond complet pour un angle donné, typiquement sensiblement égal à 60°, la moitié de la largeur de la soudure, l'encombrement de la sonde et une marge. Par exemple, pour une épaisseur de paroi inférieure ou égale à 40 mm, cette distance est sensiblement égale à 200 mm pour une soudure de largeur inférieure ou égale à 50 mm et une marge de 10 mm.

Préalablement au contrôle, la soudure 52 est arasée, de telle manière à ce que les surfaces extérieures des éléments 53 et 54 et de la soudure 52 sont alignées.

L'ensemble de contrôle comprend typiquement une sonde annulaire 12 et trois sondes linéaires 14, ainsi qu'un calculateur 16 permettant de piloter les éléments des quatre sondes.

Chaque sonde 12, 14 a un mouvement global représenté à la figure 4. Les éléments 53 et 54 sont des tuyaux et la soudure 52 s'étend principalement dans un plan P. La sonde est disposée initialement sur la surface extérieure 56 de l'élément 53. La sonde 12, 14 réalise à une distance donnée de la soudure 52 un tour de l'élément 53 (ou ultérieurement un tour au-dessus de la soudure 52) selon un plan parallèle au plan P. Après avoir réalisé un tour complet, la sonde 12, 14 est décalée d'un pas régulier, par exemple sensiblement égale à 1 mm, dans une direction perpendiculaire au plan de la soudure P et allant de l'élément 53 à l'élément 54 et refait un tour, ainsi de suite jusqu'à ce que le faisceau a parcouru l'ensemble de la soudure avec le pas donné.

Alternativement, chaque sonde 12 et 14 a un mouvement global en créneau, représenté à la figure 5. La sonde est disposée initialement sur la surface extérieure 56 de l'élément 53. La sonde 12, 14 est déplacée en direction de la soudure 52, voire passe sur la surface de la soudure 52. Puis, la sonde 12, 14 est décalée d'un pas régulier, par exemple sensiblement égale à 1 mm, sur la surface où elle est située, parallèlement au plan de la soudure P. La sonde 12,14 est ensuite déplacée en s'éloignant de la soudure 52 en direction de l'élément 53 jusqu'à sa distance à la soudure 52 initial. Enfin la sonde 12, 14 est décalée du même pas que précédemment dans la même direction et le même sens que précédemment. Ces étapes sont répétées jusqu'à avoir fait le tour complet de l'élément 53.

Sur les figures 6 à 8, sont représentées des vues en coupe de plans de parcours pour chacune des sondes.

Dans l'ensemble des modes de réalisation représentés, la sonde 12, 14 se déplace dans une seule direction allant de l'élément 53 vers l'élément 54.

La sonde annulaire 12, dont un plan de parcours est représenté à la figure 6, est située initialement à la surface extérieure 56 de l'élément 53 à une certaine distance de la soudure 52, par exemple inférieure à 25mm. La sonde 12 réalise, comme décrit en référence à la figure 4, un tour de la soudure 52. A chaque emplacement, la sonde 12 émet successivement plusieurs faisceaux 26, qui sont décalés dans le temps et focalisés à plusieurs profondeurs. Cela est possible tant que la vitesse des tirs de la sonde 12 et des phénomènes acoustiques est très supérieure à la vitesse de déplacement de la sonde 12. L'ensemble de l'information peut ainsi être récupéré. La sonde 12 est alors décalée d'un pas, par exemple égal à 1mm, perpendiculairement à la soudure et dans la direction de l'élément 53 à l'élément 54, notée X. Cela est répété jusqu'à ce que la sonde annulaire 12 atteigne l'élément 54 ou soit sur l'élément 54 à une distance de la soudure 52 sensiblement égale ou inférieure à la distance initiale.

Les éléments annulaires 20 à 24 de la sonde annulaire 16 sont sensiblement perpendiculaires au plan P de la soudure 52.

Dans une autre variante, à chaque distance à la soudure 52, la sonde 12 réalise un premier tour de la soudure 52 en focalisant le faisceau 26 à une certaine profondeur, puis un second tour à une autre profondeur, ainsi de suite pour chaque profondeur souhaitée. Dans un autre mode de réalisation, un unique tour est réalisé à une certaine profondeur pour une distance à la soudure 52 donnée, et l'ensemble du procédé est repris pour différentes profondeurs.

Dans les figures 7 et 8, la soudure 52 s'étend entre deux plans P' et P" parallèles entre eux, tel qu'au moins un point de P', respectivement P", appartiennent à la soudure 52 au niveau de l'élément 54, respectivement de l'élément 53. P est alors le plan médian à P' et P".

Concernant les sondes linéaires 14, celles-ci sont placées sur la surface extérieure 56 de l'élément 53 selon deux orientations possibles.

Lors d'une étape d'émission d'ondes transversales par la sonde linéaire du procédé de l'invention, les éléments linéaires 34 à 39 de la sonde 14 sont sensiblement perpendiculaires au plan P de la soudure 52, c'est-à-dire qu'ils sont suivant l'axe X. Cela permet de détecter les défauts longitudinaux de la soudure 52.

Dans un autre cas, non couvert par le procédé selon l'invention, les éléments linéaires 34 à 39 de la sonde linéaire sont sensiblement parallèles au plan P de la soudure 52. Cela signifie que les éléments linéaires 34 à 39 sont selon l'axe de déplacement de la sonde 14, en rotation autour des tuyaux 53, 54. Cela permet de détecter les défauts transverses.

La sonde linéaire 14 émet un faisceau ultrasonore 40 orienté selon un angle β après réfraction en sortie du sabot 44. Pour simplifier l'explication, la réfraction du faisceau ultrasonore 40 à chaque changement de milieu n'est pas représentée sur les figures 7 et 8 ou décrite, mais doit être prise en compte dans le calcul du plan de sondage de la sonde 14.

Sur la figure 7, le faisceau 40 est focalisé en un point F, avant que le faisceau atteigne la surface intérieure 50 du tuyau. La sonde linéaire 14 est placée initialement sur la surface extérieure 56 de l'élément 53 à une distance de la soudure 52 telle que le point F de focalisation est compris dans le plan P".

La sonde 14 réalise, comme décrit en référence à la figure 4, un tour de l'élément 53, puis est décalée d'un pas, par exemple égal à 1mm, perpendiculairement aux plans P' et P" et dans la direction de l'élément 53 à l'élément 54, notée X.

Cela est répété jusqu'à ce que le point focal F soit dans le plan P' ou jusqu'à ce que la sonde 14 atteigne le plan P'.

De même qu'en référence à la sonde annulaire 12, la sonde linéaire 14 peut émettre successivement une pluralité de faisceaux 40 focalisés à différentes distances, depuis un emplacement, la vitesse de déplacement de la sonde 14 étant très inférieure à la vitesse des tirs de la sonde 14 et des phénomènes acoustiques. Le point initial de la sonde 14 est alors choisi pour que l'ensemble des points de focalisation des faisceaux 40 soit situé sur le plan P" ou au niveau de l'élément 43. Alternativement, la sonde 14 émet un unique faisceau avec une distance de focalisation donnée et l'ensemble du procédé est répété pour des distances de focalisation différentes.

L'ensemble du procédé est répété pour des angles β différents, par exemple compris entre 35 et 70°.

Cependant, la détection grâce à un faisceau d'ultrasons ne permet pas de détecter les défauts sensiblement selon l'axe du faisceau. Ainsi les défauts de la soudure qui s'étendent principalement selon un axe de même orientation que le faisceau de la figure 6 pour une inclinaison entre 35 et 70° ne seront pas nécessairement détectés par ce plan de sondage.

Le plan de sondage schématisé à la figure 8 nécessite également une sonde linéaire 14 orientée selon un angle β. Le calculateur 16 calcule une loi de retard telle que le faisceau 40 focalise en un point F après une réflexion du faisceau 40 sur la surface intérieure 50 de l'élément 53.

La sonde linéaire 14 est placée initialement sur la surface extérieure 56 de l'élément 53 à une distance de la soudure 52 telle que le point F de focalisation est compris dans le plan P".

La sonde réalise, comme décrit en référence à la figure 4, un tour de l'élément 53, puis est décalée d'un pas, par exemple égal à 1mm, perpendiculairement aux plans P' et P" et dans la direction de l'élément 53 à l'élément 54, notée X.

Cela est répété jusqu'à ce que le point focal F soit dans le plan P' ou jusqu'à ce que la sonde 14 atteigne le plan P'.

De même qu'en référence à la figure 7, la sonde linéaire 14 peut émettre successivement une pluralité de faisceaux 40 focalisés à différentes distances, depuis un emplacement, la vitesse de la sonde 14 étant très inférieure à la vitesse des tirs de la sonde 14 et des phénomènes acoustiques. Le point initial de la sonde 14 est alors choisi pour que l'ensemble des points de focalisation soit situé sur le plan P" ou au niveau de l'élément 43. Alternativement, la sonde 14 émet un unique faisceau avec une distance de focalisation donnée et l'ensemble du procédé est répété pour des distances de focalisation différentes.

L'ensemble du procédé est répété pour des angles β différents, par exemple compris entre 35° et 70°.

Les données obtenues par ce procédé permettent de bien dimensionner les défauts sur l'ensemble du volume de la soudure, ainsi qu'à les localiser et les caractériser.

L'ensemble de contrôle permet d'obtenir une redondance des données de détection, par exemple, grâce à un pas d'acquisition fin, par exemple de l'ordre du millimètre, ou/et à la mise en œuvre du procédé de contrôle avec de multiples incidentes. Une telle redondance des données est nécessaire au niveau de performance revendiqué.

La sonde annulaire est, par exemple, particulièrement adaptée pour imager des défauts volumiques, du type inclusions solides et gazeuses, et des défauts, par exemple parallèles à la surface sur laquelle est posée la sonde, dus à un manque de fusion entre les passes lors de la réalisation de la soudure, notamment par exploitation de la réflexion. La sonde annulaire est, en outre, adaptée pour caractériser les défauts plans, du type fissure ou manque de fusion, notamment leur localisation, leur extension en profondeur, leur caractère débouchant ou non, leur orientation, etc. par exploitation de la diffraction.

La sonde linéaire est, par exemple, particulièrement adaptée pour imager des défauts plans situés au niveau du chanfrein d'une des surfaces autour de la soudure ou dans la soudure. La sonde linéaire permet, en outre, d'imager les défauts volumiques.

Une telle redondance permet d'améliorer la détection de défauts de faible dimension, c'est-à-dire équivalente à la radiographie selon le code RCC-M Tome IV - section S 7000 « Soudures de production », § S 7724.3 valable à ce jour, de niveau 1, y compris lorsqu'une des surfaces n'est pas facilement accessible. La fiabilité de la détection avec cet ensemble de contrôle est, par exemple, comparable à celle obtenue dans le cadre de contrôles réalisés par radiographie.

Cette méthode est fiable pour contrôler les soudures d'un réacteur nucléaire suivant un unique sens de sondage. Le niveau de performance atteint est, par exemple, d'après le code RCC-M Tome IV - section S 7000 « Soudures de production », § S 7724.3 valable à ce jour, de niveau 1.

## Revendications

1. Procédé de contrôle de soudures par ultrasons, comprenant au moins les étapes de :
- fourniture d'un ensemble de contrôle de soudures par ultrasons, comprenant au moins une sonde multiélément annulaire (12) à ondes longitudinales inclinées entre 0 et 5°, comportant plusieurs éléments annulaires concentriques (20 à 24), et, une sonde multiélément linéaire (14) à ondes transversales inclinées entre 35 et 70°, comportant plusieurs éléments rectilignes (34 à 39) parallèles entre eux,
la sonde annulaire (12) comprenant un organe d'émission d'ondes (18) de fréquence comprise entre 5 et 15MHz et un moyen de focalisation des énergies acoustiques émises à partir des éléments annulaires (20 à 24) par gestion électronique des lois de retard, et la sonde linéaire (14) comprend un organe d'émission d'ondes (32) de fréquence comprise entre 6 et 10MHz et un moyen de focalisation des énergies acoustiques émises à partir de ces éléments rectilignes (34 à 39) par gestion électronique de lois de retard,
- émission d'ondes longitudinales émises par la sonde annulaire (12) dans une soudure (52), et
- émission d'ondes transversales par la sonde linéaire (14) focalisées dans la soudure (52), la soudure (52) s'étendant sensiblement dans un plan (P), les éléments linéaires (34 à 39) de la sonde linéaire (14) étant placées sensiblement perpendiculaires au plan (P) de la soudure (52).

2. Procédé de contrôle selon la revendication 1, **caractérisé en ce que** l'ensemble de contrôle comprend un sabot (27) permettant de soutenir les éléments (20 à 24) de la sonde annulaire (12) et/ou un sabot (44) permettant d'incliner les éléments (34 à 39) de la sonde linéaire (14) par rapport à une surface (56) sur laquelle la sonde (14) est disposée.

3. Procédé de contrôle selon l'une quelconque des revendications 1 ou 2, **caractérisé en ce que** la sonde linéaire (14) comprend un moyen additionnel de focalisation des énergies acoustiques par l'agencement des éléments (34 à 39) de la sonde en une lentille acoustique.

4. Procédé de contrôle selon l'une quelconque des revendications précédentes, **caractérisé en ce que** l'ensemble de contrôle comprend un calculateur (16) permettant d'activer les éléments (20 à 24, 34 à 39) de la sonde annulaire (12) et/ou linéaire (14) à des instants différents et/ou de ne pas activer certains éléments (20 à 24, 34 à 39).

5. Procédé de contrôle selon la revendication 4, **caractérisé en ce que** le calculateur (16) est programmé pour activer en premier les éléments annulaires à l'extérieur de la sonde annulaire (12) vers le centre.

6. Procédé de contrôle selon l'une quelconque des revendications 1 à 5, **caractérisé en ce que** la soudure (52) s'étend sensiblement dans un plan (P) et les éléments annulaires (20 à 24) de la sonde annulaire (16) sont sensiblement perpendiculaires au plan (P) de la soudure (52).

7. Procédé de contrôle selon l'une quelconque des revendications 1 à 6, **caractérisé en ce que** le procédé comprend une étape d'arasage de la soudure (52) préalable à l'étape de balayage de la soudure (52) par une sonde (12, 14).

## Patentansprüche

1. Verfahren zum Prüfen von Schweißungen mittels Ultraschall, welches zumindest die folgenden Schritte aufweist:
- Bereitstellen einer Anordnung zum Prüfen von Schweißungen mittels Ultraschall, welche aufweist zumindest eine ringförmige Multi-Element-Sonde (12) für Longitudinalwellen, welche zwischen 0 und 5° geneigt sind, welche mehrere konzentrische ringförmige Elemente (20 bis 24) aufweist, und eine lineare Multi-Element-Sonde (14) für Transversalwellen, welche zwischen 35 und 70° geneigt sind, welche mehrere geradlinige Elemente (34 bis 39) aufweist, welche parallel zueinander sind,
wobei die ringförmige Sonde (12) aufweist ein Organ zum Aussenden von Wellen (18) mit einer Frequenz, welche zwischen 5 und 15 MHz liegt, und ein Mittel zum Fokussieren von akustischen Energien, welche ausgehend von den ringförmigen Elementen (20 bis 24) ausgesendet werden, mittels elektronischer Steuerung von Verzögerungsgesetzen, und wobei die lineare Sonde (14) aufweist ein Organ zum Aussenden von Wellen (32) mit einer Frequenz, welche zwischen 6 und 10 MHz liegt, und ein Mittel zum Fokussieren von akustischen Energien, welche ausgehend von diesen geradlinigen Elementen (34 bis 39) ausgesendet werden, mittels elektronischer Steuerung von Verzögerungsgesetzen,
- Aussenden von Longitudinalwellen, welche von der ringförmigen Sonde (12) ausgesendet werden, in eine Schweißung (52) und
- Aussenden von Transversalwellen mittels der linearen Sonde (14), welche in die Schweißung (52) fokussiert sind, wobei sich die Schweißung (52) im Wesentlichen in einer Ebene (P) erstreckt, wobei die linearen Elemente (34 bis 39) der linearen Sonde (14) im Wesentlichen senkrecht zur Ebene (P) der Schweißung (52) angeordnet sind.

2. Verfahren zum Prüfen gemäß Anspruch 1, **dadurch gekennzeichnet, dass** die Anordnung zum Prüfen aufweist einen Schuh (27), welcher es erlaubt, die Elemente (20 bis 24) der ringförmigen Sonde (12) zu halten, und/oder einen Schuh (44), welcher es erlaubt, die Elemente (34 bis 39) der linearen Sonde (14) bezüglich einer Fläche (56), an welcher die Sonde (14) angeordnet ist, zu neigen.

3. Verfahren zum Prüfen gemäß irgendeinem der Ansprüche 1 oder 2, **dadurch gekennzeichnet, dass** die lineare Sonde (14) aufweist ein zusätzliches Mittel zum Fokussieren von akustischen Energien mittels Anordnens der Elemente (34 bis 39) der Sonde zu einer akustischen Linse.

4. Verfahren zum Prüfen gemäß irgendeinem der vorherigen Ansprüche, **dadurch gekennzeichnet, dass** die Anordnung zum Steuern einen Rechner (16) aufweist, welcher es erlaubt, die Elemente (20 bis 24, 34 bis 39) der ringförmigen (12) und/oder der linearen (14) Sonde zu unterschiedlichen Zeitpunkten zu aktivieren und/oder bestimmte Elemente (20 bis 24, 34 bis 39) nicht zu aktivieren.

5. Verfahren zum Prüfen gemäß Anspruch 4, **dadurch gekennzeichnet, dass** der Rechner (16) programmiert ist, um zuerst die ringförmigen Elemente am Äußeren der ringförmigen Sonde (12) zur Mitte hin zu aktivieren.

6. Verfahren zum Prüfen gemäß irgendeinem der Ansprüche 1 bis 5, **dadurch gekennzeichnet, dass** sich die Schweißung (52) im Wesentlichen in einer Ebene (P) erstreckt und die ringförmigen Elemente (20 bis 24) der ringförmigen Sonde (16) im Wesentlichen senkrecht zur Ebene (P) der Schweißung (52) sind.

7. Verfahren zum Prüfen gemäß irgendeinem der Ansprüche 1 bis 6, **dadurch gekennzeichnet, dass** das Verfahren einen Schritt des Schleifens der Schweißung (52) vor dem Schritt des Abtastens der Schweißung (52) mittels einer Sonde (12, 14) aufweist.

## Claims

1. An ultrasonic weld inspection method, comprising at least the steps of:
- providing an assembly for inspecting welds by ultrasounds, comprising at least one annular multielement probe (12) with longitudinal waves inclined between 0 and 5°, including several concentric annular elements (20 to 24), and a linear multielement probe (14) with transverse waves inclined between 35 and 70°, including several rectilinear elements (34 to 39) parallel to one another,
the annular probe (12) comprises a member (18) for emitting waves with a frequency comprised between 5 and 15 MHz and a means for focusing acoustic energies emitted from annular elements (20 to 24) by electronic management of the delay laws, and the linear probe (14) comprises a member (32) for emitting frequency waves comprised between 6 and 10 MHz and a means for focusing acoustic energies emitted from these rectilinear elements (34 to 39) by electronic management of the delay laws,
- emitting longitudinal waves emitted by the annular probe (12) into a weld (52), and
- emitting transverse waves via the linear probe (14), focused in the weld (52), the weld (52) extending substantially in a plane (P), the linear elements (34 to 39) of the linear probe (14) being placed substantially perpendicular to the plane (P) of the weld (52).

2. The inspection method according to claim 1, **characterized in that** the inspection assembly comprises a shoe (27) making it possible to support the elements (20 to 24) of the annular probe (12) and/or a shoe (44) making it possible to incline the elements (34 to 39) of the linear probe (14) relative to a surface (56) on which the probe (14) is arranged.

3. The inspection method according to any one of claims 1 or 2, **characterized in that** the linear probe (14) comprises an additional means for focusing acoustic energies by arranging elements (34 to 39) of the probe in an acoustic lens.

4. The inspection method according to any one of the preceding claims, **characterized in that** the inspection assembly comprises a computer (16) making it possible to activate the elements (20 to 24, 34 to 39) of the annular (12) and/or linear (14) probe at different moments and/or not to activate some elements (20 to 24, 34 to 39).

5. The inspection assembly according to claim 4, **characterized in that** the computer (16) is programmed first to activate the annular elements outside the annular probe (12) toward the center.

6. The inspection method according to any one of claims 1 to 5, **characterized in that** the weld (52) extends substantially in a plane (P) and the annular elements (20 to 24) of the annular probe (16) are substantially perpendicular to the plane (P) of the weld (52).

7. The inspection method according to any one of claims 1 to 6, **characterized in that** the method comprises a step for shaving the weld (52) prior to the step for sweeping the weld (52) with a probe (12, 14).
